(19) Europäisches Patentamt
European Patent Office
Office européen des brevets

(11) Veröffentlichungsnummer: **0 205 631**
**B1**

(12) **EUROPÄISCHE PATENTSCHRIFT**

(45) Veröffentlichungstag der Patentschrift: **27.04.88**

(51) Int. Cl.⁴: **C 25 B 11/06**

(21) Anmeldenummer: **85107647.1**

(22) Anmeldetag: **20.06.85**

(54) **Verfahren zum Beschichten einer porösen Elektrode.**

(43) Veröffentlichungstag der Anmeldung: **30.12.86 Patentblatt 86/52**

(45) Bekanntmachung des Hinweises auf die Patenterteilung: **27.04.88 Patentblatt 88/17**

(84) Benannte Vertragsstaaten: **DE FR GB IT SE**

(56) Entgegenhaltungen:
**EP-A-0 002 787**
**EP-A-0 033 363**
**US-A-3 915 838**
**US-A-3 933 616**
**US-A-4 329 219**
**US-A-4 360 417**

(73) Patentinhaber: **SIGRI GmbH, Werner- von- Siemens-Strasse 18, D-8901 Meitingen (DE)**

(72) Erfinder: **Debrodt, Heiner, Dr.Ing., Lindenstrasse 12, D-8851 Nordendorf (DE)**
Erfinder: **Liebroth, Dieter, Dipl.- Ing., Eichenweg 12a, D-8857 Wertingen (DE)**
Erfinder: **Vihl, Petra, Dipl.- Ing. (FH), Ottmarshauserstrasse 128, D-8902 Neusäss (DE)**

**EP 0 205 631 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein verfahren zum Beschichten einer porösen Elektrode für elektrochemische Prozesse mit einer die Elektrodenoberfläche wenigstens zum Teil bedeckenden, Metalle und Verbindungen von Metallen enthaltenden Aktivierungsschicht, bei welchem lösliche Verbindungen eines oder mehrerer Platinmetalle zusammen mit löslichen Verbindungen eines oder mehrerer Metalle aus der Gruppe Titan, Tantal, Zirkonium, Niob und einem Lösemittel auf die Elektrodenoberfläche aufgetragen und einer thermischen Behandlung unterworfen werden.

Zur Aktivierung von Elektroden für elektrochemische Prozesse, z. B. von Anoden für die Chloralkali-Elektrolyse, die im wesentlichen aus einem gegen den Elektrolyten und die Elektrolyseprodukte beständigen, häufig unter den Elektrolysebedingungen Passivierungsschichten bildenden Werkstoff bestehen, sind zahlreiche Verfahren bekannt geworden, bei welchem ein Platinmetall oder Verbindungen eines Platinmetalls in einer elektrochemisch wirksamen Verteilung auf die Elektrodenoberfläche aufgetragen und in dieser verankert werden. Zum Beispiel ist es nach der DE-AS-1 155 762 bekannt, entfettete und geätzte Titanplatten und -bleche galvanisch mit einem Platinmetall zu beschichten und die beschichteten Platten zunächst in inerter und dann in oxidierender Atmosphäre bis auf etwa 800°C zu erhitzen. Man erhält eine festhaftende Aktivierungsschicht und zugleich einen verbesserten Schutz des Elektrodenwerkstoffs durch Umsetzung des in den Poren der Aktivierungsschicht freiliegenden Titans in Rutil. Es ist auch bekannt, auf die Elektrodenoberfläche Lösungen aufzutragen, die Verbindungen eines Platinmetalls und Verbindungen eines passivierbaren Metalls, wie z. B. Titan, Tantal, Zirkonium, Niob enthalten, das Lösungsmittel zu verdampfen und durch Erhitzen des Präzipitats in oxidierender Atmosphäre eine Aktivierungsschicht zu bilden, die aus Platinmetall-Oxiden und Oxiden der passivierbaren Metalle besteht (US-PS-3 778 307). Die durch die US-PS-3 915 838 bekanntgewordene Elektrode hat eine Aktivierungsschicht aus im wesentlichen Oxiden von Platinmetallen und eine die Aktivierungsschicht bedeckende Schicht, die Oxide passivierbarer oder filmbildender Metalle enthält. Zur Herstellung der Deckschicht aus z. B. Titanoxid wird Titantetrachlorid mit einem Alkohol erhitzt, das gebildete HCl abgeführt und eine alkoholische Lösung des Alkylchlorotitanats auf die Elektrode aufgetragen. Bei der verwendeten Titanchlorid-Alkohollösung besteht ein Überschuß an Alkohol bemessen zu der Alkoholmenge, die theoretisch notwendig ist, alle vier Titan-Chlor-Bindungen zu spalten. Diese und andere bekanntgewordene Verfahren zum Beschichten von Elektroden sind jedoch weniger geeignet für das Aufbringen von Aktivierungsschichten auf poröse Elektroden. Beispiele für poröse Elektroden sind Anoden aus Sintertitan (DE-OS-2 305 175), Elektroden aus Titansuboxid (DE-AS-2 405 010), mit einer porösen Trägerschicht für das Aktivierungsmittel versehene metallischen Anoden (DE-OS-2 035 212) und Elektroden aus Graphit, die herstellungsbedingt eine mehr oder weniger große Porosität aufweisen. Die Aktivierungsschichten haften besonders gut auf porösen Unterlagen und die elektrochemisch wirksame Oberfläche poröser Elektroden ist größer als die Oberfläche einer Elektrode aus einem porenfreien Werkstoff. Bringt man wie oben beschrieben gelöste Aktivierungsmittel auf die Oberfläche einer porösen Elektrode, durchdringt die Lösung einen größeren Teil des Elektrodenvolumens und die Aktivierungsmittel werden beim Verdampfen des Lösungsmittels insbesondere auch in Poren abgeschieden, die einen größeren Abstand von der geometrischen Elektrodenoberfläche haben. Dieser Teil der Aktivierungsmittel steht beim Betrieb der Elektrode nicht im Kontakt mit dem Elektrolyten und ist damit elektrochemisch inaktiv. Die wegen der hohen Kosten für Platinmetalle besonders unerwünschten Verluste sind besonders groß, wenn das Aktivierungsmittel aus Lösungen ausgefällt wird, weniger groß bei galvanisch abgeschiedenen Schichten, die aufgrund ihrer dichten Struktur aber weniger elektrochemisch wirksam sind. Es ist auch bekannt, das Aktivierungsmittel in Form feindisperser Suspensionen auf die Elektrodenoberfläche aufzutragen (z. B. DE-AS-1 671 422). Nachteilig ist bei diesem Verfahren die häufig ungleichförmige Verteilung des Aktivierungsmittels und die vergleichsweise schlechte Haftung der Aktivierungsschicht. Bei einem anderen Verfahren (DE-OS-3 004 080) und EP-A-033 363) verwendet man eine Dispersion, die durch Erhöhung der Temperatur in eine echte Lösung übergeführt wird. In der "Dispersionsphase" dringt das Aktivierungsmittel nicht in das Porensystem der Elektrode ein und es verteilt sich in der "Lösungsphase" gleichförmig auf der Elektrodenoberfläche, wobei dann aber ein Teil des Aktivierungsmittels in die Poren diffundiert.

Der Erfindung liegt daher die Aufgabe zugrunde, den Bedarf an Aktivierungsmittel beim Beschichten poröser Elektroden zu senken und das Aktivierungsmittel gleichförmig auf der Elektrodenoberfläche zu verteilen.

Die Aufgabe wird erfindungsgemäß mit einem Verfahren der eingangs genannten Art dadurch gelöst, daß 4-wertige Chloride eines Metalls aus der Gruppe Ti, Ta, Zr, Nb in einer zur vollständigen Umsetzung des Chlors zu Chlorwasserstoff nicht ausreichenden Menge Alkohol gelöst und eine Metallchloroalkoholat-Komplexverbindung gebildet wird, die Komplexverbindung portionsweise in die alkoholische Lösung eines Chlorids eines platinmetalls eingerührt, die Lösung mit einer Viskosität von 0,01 bis 0,1 Pa · s auf die Elektrodenoberfläche aufgetragen, das Lösemittel verdampft und durch Erhitzen auf eine Temperatur von 250 bis 600°C eine Aktivierungsschicht gebildet wird.

Elektroden, die nach dem erfindungsgemäßen Verfahren beschichtet werden, sind durchgehend porös, z. B. aus Sintermetallen, Graphit oder Kohlenstoff bestehende Elektroden, oder bestehen aus einem porenfreien Werkstoff, der mit einer porösen Schicht versehen ist. Die Dicke der beispielsweise durch Plasmaspritzen, Spachteln u. dgl. aufgetragenen porösen Schicht ist im wesentlichen größer als die Eindringtiefe des Elektrolyts bei der bestimmungsgemäßen Verwendung der Elektroden. Die auf die Elektrode aufgetragene Aktivierungsschicht enthält ein oder mehrere Platinmetalle, Verbindungen von Platinmetallen und wenigstens

eine Verbindung eines Elements aus der Gruppe Titan, Tantal, Zirkonium, Niob, zweckmäßig ein Oxid. Zur Herstellung der Aktivierungsschicht werden Chloride wenigstens eines Elements aus der Gruppe der passivierbaren Metalle mit einem Alkohol, besonders einem Alkohol aus der Gruppe Ethanol, Propanol, Butanol gelöst. Die Substitution des Chlorids bei der Solvolyse verläuft nicht vollständig; für die Umsetzung von Titantetrachlorid mit Ethanol wird beispielsweise folgende Reaktion angenommen:

$$TiCl_4 + 3\,ETOH \rightarrow 2\,HCl + TiCl_2 \cdot (OET)_2 \cdot ETOH$$

(F.A. Cotton, G. Wilkinson, Anorganische Chemie, 2. Aufl., Weinheim 1968, S. 752/753).

Die gebildeten Metallchloroalkoholat-Komplexverbindungen werden im folgenden kurz als "Komplex" bezeichnet.

Das erfindungsgemäße Verfahren nützt die polymere Natur der "Komplexe". Die sich bildende zähe goldgelbe Masse wird zur Steuerung des Polymerisationsgrads zweckmäßig gekühlt und portionsweise in die alkoholische oder zweckmäßig in die salzsaure alkoholische Lösung eines Chlorids eines Platinmetalls eingerührt. Geeignete Lösungsmittel sind besonders Ethanol, Propanol, Butanol und Iso-Formen dieser Alkohole. Die Viskosität der Lösung wird bestimmt durch das Verhältnis Platinmetall-Chlorid-Lösemittel und vor allem durch den Anteil des eingerührten "Komplexes". Ihre Größe kann durch Änderung des Mischungsverhältnisses in einfacher Weise der Porosität und vor allem der Porengrößenverteilung der Elektrode angepaßt werden, so daß sich die Lösung beim Auftragen gleichmäßig auf die Elektrodenober fläche verteilt und dabei nur in die Porenhälse, nicht aber in die Tiefe der Elektrode eindringt. Vorzugsweise verwendet man Gemische, die 50 bis 70 % und "Komplex" und 50 bis 30 % Platinmetall-Chlorid-Lösung enthalten. Die Viskosität dieser Gemische beträgt etwa 0,01 bis 0,1 Pa · s. Lösungen mit einer kleineren Viskosität sind nur für die Beschichtung sehr feinporiger Elektroden geeignet, Lösungen mit größerer Viskosität lassen sich kaum gleichmäßig auf der Elektrodenoberfläche verteilen.

Die viskose Lösung wird zweckmäßig auf die Oberfläche der Elektrode aufgepinselt oder aufgebürstet, das Lösemittel durch Erwärmen auf etwa 80 bis 100°C entfernt und durch Erhitzen der beschichteten Elektrode auf eine Temperatur von 250 bis 600°C werden die aufgebrachten Verbindungen zersetzt und eine Aktivierungsschicht gebildet, die im Gemisch mit Oxiden eines oder mehrerer Elemente aus der Gruppe Titan, Tantal, Zirkonium, Niob ein oder mehrere Metalle der Platingruppe und Oxide von Metallen der Platingruppe enthält. Das Verhältnis der Platinmetalle und der Platinmetalloxide in der Aktivierungsschicht wird im wesentlichen durch die Erhitzungstemperatur, die Erhitzungszeit und die Art des Platinmetalls bestimmt. Vorteilhaft ist eine Erhitzungstemperatur von 500 bis 550°C und eine Erhitzungszeit von 5 bis 15 min. Bei niedrigeren Temperaturen sind längere Erhitzungszeiten zweckmäßig, bei höheren Temperaturen kürzere Zeiten. In an sich bekannter Weise kann die Aktivierungsschicht auch aus mehreren Teilschichten gebildet werden.

Die Elektrode wird zu diesem Zweck nach dem Auftragen einer ersten Schicht erhitzt und die Schicht auf der Oberfläche fixiert. Man trägt dann eine zweite Schicht auf, erhitzt und wiederholt die Verfahrensschritte, bis die vorgegebene Dicke der Aktivierungsschicht erreicht ist. Dieses Verfahren eignet sich besonders zur Herstellung von Aktivierungsschichten größerer Dicke, von Konzentrationsgradienten innerhalb der Schicht oder von Schichten, die verschiedene Elementkombinationen über ihre Dicke enthalten. Die Wirksamkeit der Aktivierungsschicht kann durch derartige Anordnungen den Bedingungen besser angepaßt werden, denen die Elektrode bei ihrem Gebrauch ausgesetzt ist.

Die Vorteile des erfindungsgemäßen Verfahrens zum Herstellen einer Aktivierungsschicht auf einer porösen Elektrode sind im wesentlichen folgende:

1. Nahezu die gesamte auf die Elektrodenoberfläche aufgetragene Menge an Aktivierungsmitteln ist beim bestimmungsgemäßen Gebrauch der Elektrode an den elektrochemischen Reaktionen beteiligt. Als Folge des hohen Nutzungsgrades ist die aufgetragene Menge nicht wesentlich von der Menge verschieden, die für die Aktivierung porenfreier Elektroden gebraucht wird.
2. Durch Anpassung der Viskosität der Beschichtungslösung an die Porengröße der Elektrode wird unabhängig von dieser Größe ein hoher Nutzungsgrad des Aktivierungsmittels erzielt.
3. Die Aktivierungsschicht ist feinkörnig strukturiert und weist eine große elektrochemische Aktivität auf.
4. Die Aktivierungsschicht ist fest in der porösen Elektrode verankert.

Die Erfindung wird im folgenden beispielhaft erläutert:

**Beispiel 1**

Eine Platte aus Sintertitan mit den Maßen 4 x 100 x 250 mm wurde mit einer Aktivierungsschicht versehen. Die Porosität des Sintertitans war 20 %, die Porengrößenverteilung wie folgt:

| Porendurchmesser µm | Anteil |
|---|---|
| < 0,25 | 77 |
| 0,25 - 2,5 | 3,4 |
| 2,5 - 5 | 2,0 |
| 5 - 7,5 | 3,0 |
| 7 -10 | 12,6 |
| > 10 | 2,0 |

Zur Herstellung der Aktivierungsbeschichtung wurden 2,4 ml Titantetrachlorid unter ständigem Rühren in 2,3 ml Ethanol gelöst. Der durch Solvolyse gebildete "Komplex", dessen Temperatur auf 62°C stieg, wurde in einem Gefrierschrank auf -18°C gekühlt und anschließend portionsweise in eine Lösung, enthaltend 2,1 g Rutheniumchlorid in 2,3 ml Ethanol, eingerührt. Die Viskosität des Gemischs betrug 0,04 Pa · s bei 20°C. Die Aktivierungslösung wurde durch Pinseln auf die Oberfläche der Sintertitan-Elektrode aufgetragen, wobei eine Konzentration von 10 g Ruthenium/$m^2$ eingestellt wurde. Nach Verdampfen des Lösemittels wurde die Elektrode auf 500°C erhitzt, und nach Abkühlung der Zyklus zweimal wiederholt, so daß die spezifische Beschichtung schließlich 30 g Ruthenium/$m^2$ betrug.

Die Verteilung der Aktivierungsmittel wurde spektralanalytisch bestimmt und zu diesem Zweck eine 0,3 mm dicke Schicht ausgehend von der aktivierten Oberfläche durch Fräsen entfernt.

| Aktivierung | 0 - 0,3 mm von der Oberfläche | > 0,3 mm von der Oberfläche |
|---|---|---|
| 10 g Ru/$m^2$ | 71 % | 29 % |
| 20 g Ru/$m^2$ | 74 % | 26 % |
| 30 g Ru/$m^2$ | 76 % | 24 % |

Zum Vergleich wurde eine Sintermetall-Elektrode gleicher Beschaffenheit mit einer Dispersion gemäß DE-OS-3 004 080, Beispiel 1 beschichtet und eine Ruthenium-haltige Aktivierungsschicht erzeugt. Die Verteilung des Aktivierungsmittels in der Elektrode war wie folgt:

| Aktivierung | 0 - 0,3 mm von der Oberfläche | > 0,3 mm von der Oberfläche |
|---|---|---|
| 10 g Ru/$m^2$ | 41 % | 59 % |
| 20 g Ru/$m^2$ | 34 % | 66 % |
| 30 g Ru/$m^2$ | 27 % | 73 % |

**Beispiel 2**

Platten aus Sintertitan wurden zu einem Teil mit Titansuboxid $TiO_{0,5}$-Pulver und zu einem anderen Teil mit Titanpulver beschichtet. Die Pulver wurden in Form wässeriger Suspensionen, die etwa ein Prozent Methylcellulose enthielten, auf die Oberflächen der Platten gespritzt und diese zum Sintern der Pulverschicht im Vakuum auf 1250°C erhitzt. Die Sinterzeit betrug 2 h; die Porengrößenverteilung in den etwa 0,5 mm dicken Sinterschichten war wie folgt:

| Porendurchmesser µm | Anteil ($TiO_{0,5}$) | Anteil (Ti) |
|---|---|---|
| < 0,25 | 83,9 | 80,9 |
| 0,25 - 2,5 | 4,9 | 5,0 |
| 2,5 - 5 | 3,0 | 3,2 |
| 5 - 7,5 | 1,8 | 3,4 |
| 7,5 - 10 | 2,1 | 5,1 |
| > 10 | 4,3 | 2,4 |

Zur Aktivierung wurden wie in Beispiel 1 beschrieben eine mit Rutheniumchlorid und Titan-"Komplex" präparierte Schicht auf die Elektroden aufgebracht und die Verbindungen durch Tempern zersetzt. Andere mit Sinterschichten versehene Elektroden wurden zum Vergleich - wie ebenfalls in Beispiel 1 ausgeführt - gemäß DE-OS-3 004 080, Beispiel 1 beschichtet.

a) Rutheniumgehalt in der $TiO_{0,5}$-Sinterschicht

| Aktivierung | Erfindung | Vergleich |
|---|---|---|
| 10 g $Ru/m^2$ | 97 % | 56 % |
| 20 g $Ru/m^2$ | 98 % | 43 % |
| 30 g $Ru/m^2$ | 96 % | 38 % |

b) Rutheniumgehalt in der Ti-Sinterschicht

| Aktivierung | Erfindung | Vergleich |
|---|---|---|
| 10 g $Ru/m^2$ | 84 % | 31 % |
| 20 g $Ru/m^2$ | 88 % | 27 % |
| 30 g $Ru/m^2$ | 89 % | 25 % |

Die Verluste an Aktivierungsmittel sind bei dem neuen Beschichtungsverfahren wesentlich kleiner als bei den vorbekannten Verfahren.

**Beispiel 3**

Eine Graphitanode mit einer Porosität von 26 % und einer mittleren Porengröße von ca. 10 µm wurde mit einer mit Titan-"Komplex", Rutheniumchlorid und Iridiumchlorid präparierte Lösung beschichtet und zur Zersetzung der Verbindungen fünf Minuten auf 500°C erhitzt. Wegen der größeren Poren des Graphitkörpers war die Viskosität der Lösung 0,1 Pa · s. Zum Vergleich wurde eine Graphitanode gleicher Beschaffenheit mit Ruthenium- und Iridium-Oxalato-Dispersionen beschichtet (DE-OS-3 004 080). Ausgehend von der Aktivierungsfläche wurde eine 0,5 mm dicke Graphitschicht abgefräßt und der Gehalt an Platinmetallen in der Schicht und in der Restanode bestimmt.

| rel. Platinmetallgehalt | 0 - 0,5 mm | > 0,5 mm |
|---|---|---|
| Erfindung | 84 % | 16 % |
| Vergleich | 51 % | 49 % |

**Patentansprüche**

1. Verfahren zum Beschichten einer porösen Elektrode für elektrochemische Prozesse mit einer die Elektrodenoberfläche wenigstens zum Teil bedeckenden, Metalle und Verbindungen von Metallen der Platingruppe enthaltenden Aktivierungsschicht, bei welchem lösliche Verbindungen eines oder mehrerer Platinmetalle zusammen mit löslichen Verbindungen eines oder mehrerer Metalle aus der Gruppe Titan, Tantal, Zirkonium, Niob und einem Lösemittel auf die Elektrodenoberfläche aufgetragen und einer thermischen Behandlung unterworfen werden,
dadurch gekennzeichnet,
daß 4-wertige Chloride eines Metalls aus der Gruppe Ti, Ta, Zr, Nb in einer zur vollständigen Umsetzung des Chlors zu Chlorwasserstoff nicht ausreichenden Menge Alkohol gelöst und eine Metallchloroalkoholat-Komplexverbindung gebildet wird, die Komplexverbindung portionsweise in die alkoholische Lösung eines Chlorids eines Platinmetalls eingerührt, die Lösung mit einer Viskosität von 0,01 bis 0,1 Pa · s auf die Elektrodenoberfläche aufgetragen, das Lösemittel verdampft und durch Erhitzen auf eine Temperatur von 250 bis 600°C eine Aktivierungsschicht gebildet wird.
2. Verfahren nach Patentanspruch 1,
dadurch gekennzeichnet,
daß die Metallchloride mit einem Alkohol aus der Gruppe Ethanol, Propanol, Butanol zu einem Metallchloroalkoholat-Komplex umgesetzt werden.
3. Verfahren nach den Patentsprüchen 1 und 2,
dadurch gekennzeichnet,
daß ein Titanchloroalkoholat-Komplex verwendet wird.
4. Verfahren nach den Patentansprüchen 1 bis 3,
dadurch gekennzeichnet,
daß die Elektrode mit einem 50 bis 70 % Metallchloroalkoholat-Komplex und 50 bis 30 % Platinmetall-Chlorid-Lösung enthaltenden Gemisch beschichtet wird.
5. Verfahren nach den Patentansprüchen 1 bis 4,

dadurch gekennzeichnet,
daß nach Verdampfen des Lösemittels durch fünf- bis fünfzehnminütiges Erhitzen der Elektrode auf 500 bis 550°C eine Aktivierungsschicht erzeugt wird.

6. Verfahren nach den Patentansprüchen 1 bis 5,
dadurch gekennzeichnet,
daß die Aktivierungsschicht aus wenigstens zwei übereinander angeordneten Teilschichten gebildet wird.

## Claims

1. Process for the coating of a porous electrode for electrochemical processes with an activating layer containing metals and compounds of metals of the platinum group, covering at least partially the electrode surface, in which soluble compounds of one or several platinum metals together with soluble compounds of one or several metals from the group titanium, tantalum, zirconium, niobium and a solvent are applied to the surface of the electrode and subjected to a thermal treatment,

characterised in that a 4-valent chloride of a metal from the group Ti, Ta, Zr, Nb is dissolved in an insufficient amount of alcohol for complete conversion of the chlorine to hydrogen chloride and a metal chloroalcoholate complex compound is formed, the complex compound is stirred in portions into the alcoholic solution of a chloride of a platinum metal, the solution, with a viscosity of 0.01 to 0.1 Pa.s is applied to the upper surface of the electrode, the solvent is evaporated off and an activating layer is formed by heating to a temperature of 250 to 600°C.

2. Process according to claim 1, characterised in that the metal chlorides are reacted with an alcohol from the group ethanol, propanol, butanol to form a metal chloroalcoholate complex.

3. Process according to claims 1 and 2, characterised in that a titanium chloroalcoholate complex is used.

4. Process according to claims 1 to 3, characterised in that the electrode is coated with a mixture containing 50 to 70 % metal chloroalcoholate complex and 50 to 30 % of platinum metal-chloride solution.

5. Process according to claims 1 to 4, characterised in that after evaporation of the solvent by heating of the electrode to 500 to 550°C for five to fifteen minutes, an activating layer is produced.

6. Process according to claims 1 to 5, characterised in that the activating layer is formed from at least two component layers arranged on top of one another.

## Revendications

1. Procédé pour recouvrir d'une couche une électrode poreuse pour les processus électrochimique à l'aide d'une couche d'activation contenant des métaux ou des combinaisons des métaux de la famille du Platine recouvrant au moins en partie la surface des électrodes, pour laquelle les composés solubles d'un ou plusieurs métaux de la famille du Platine sont appliqués ensemble avec des composés solubles d'un ou plusieurs métaux choisis dans le groupe du Titane, du Tantale, du Zirconium et du Niobium et un solvant, sur la surface des électrodes et sont soumis à un traitement thermique, caractérisé en ce que le chlorure Tétravalent d'un métal choisi dans le groupe constitué par le Titane, le Tantale, le Zirconium, et le Niobium est dissous dans une quantité d'alcool insuffisante pour la conversion complète du Chlore en Acide Chlorhydrique et on forme uncomposé complexe chloro-alcoolate de métal, on introduit sous agitation le composé complexe par petites portions dans la solution alcoolique d'un Chlorure de métal de la famille du Platine, on applique la solution ayant une viscosité de 0,01 à 0,1 Pa.s sur la surface des électrodes, on évapore le solvant et par calcination à une température de 250 à 600°C, on forme une couche d'activation.

2. Procédé selon la revendication 1, caractérisé en ce que le Chlorure de métal est mis à réagir avec un alcool du groupe de l'Ethanol, du Propanol et du Butanol pour former un Complexe-Chloroalcoolate de métal.

3. Procédé selon les revendications 1 et 2, caractérisé en ce que l'on utilise un Complexe-Chloro-alcoolate de Titane.

4. Procédé selon les revendications 1 à 3, caractérisé en ce que l'électrode est recouverte de 50 à 70 % d'un Complexe Chloro-alcoolate de Métal et de 50 à 30 % d'un mélange contenant une solution de Chlorure d'un métal de la famille du Platine.

5. Procédé selon les revendications 1 à 4, caractérisé en ce qu'après évaporation du solvant par chauffage pendant 5 à 15 mn de l'électrode de 500 à 550°, une couche d'activation est obtenue.

6. Procédé selon les revendications 1 à 5, caractérisé en ce que la couche d'activation est formée d'au moins deux couches partielles disposées l'une au-dessus de l'autre.